# EUROPÄISCHE PATENTSCHRIFT

(11) **EP 3 616 959 B1**
(45) Veröffentlichungstag und Bekanntmachung des Hinweises auf die Patenterteilung: **10.03.2021**
(21) Anmeldenummer: 19192995.9
(22) Anmeldetag: 22.08.2019
(51) Int. Cl.: B60K 15/05, B60J 5/04, B60R 5/00, E05D 15/10

(54) **VORRICHTUNG ZUM VERKLEIDEN EINES NUTZFAHRZEUGS**
DEVICE FOR CLADDING A COMMERCIAL VEHICLE
DISPOSITIF D'HABILLAGE D'UN VÉHICULE UTILITAIRE

(30) Priorität: 30.08.2018 DE 102018121212
(43) Veröffentlichungstag der Anmeldung: 04.03.2020
(60) Teilanmeldung: 21154361.6
(73) Patentinhaber: MAN Truck & Bus SE, 80995 München (DE)
(72) Erfinder: Kondic, Darko, 85757 Karlsfeld (DE); Kusch, Willi, 88239 Wangen im Allgäu (DE)
(74) Vertreter: v. Bezold & Partner Patentanwälte - PartG mbB

(56) Entgegenhaltungen:
- EP-A1- 3 424 762
- DE-A1-102010 011 094
- DE-A1-102015 214 781
- GB-A- 824 780
- US-A1- 2015 375 630
- US-B1- 6 286 260
- US-B2- 7 431 368

## Beschreibung

Die Erfindung betrifft eine Vorrichtung zum Verkleiden eines Nutzfahrzeugs, vorzugsweise eines Lastkraftwagens.

Üblicherweise sind die Anbauteile eines Lastkraftwagens an dem Rahmen angebracht. Diese Anbauteile sind offen verbaut und somit für jeden zugänglich. Bauteile, die nicht fest mit der Rahmenstruktur verbunden sind, können dadurch leicht durch Dritte entwendet werden. Andererseits können Anbauteile auch nicht offen verbaut sein. Diese sind dann bspw. mit einer Seitenverkleidung abgedeckt, die fest verbaut und nur mit Hilfe eines Werkzeugs demontierbar ist.

Aus dem Omnibusbau sind Klappen für Staufächer bekannt, die sich vertikal nach oben schwenken lassen, um einen Zugang zum Stauraum zu gewähren.

Bspw. offenbart die EP 2 072 733 B1 eine modular austauschbare Seitenverkleidung für einen Omnibus, umfassend eine verschwenkbare Deckplatte, welche mittels einer oberen und einer unteren Befestigung mit einem Fahrzeugrahmen verbunden ist. Die obere Befestigung umfasst ein Foliengelenk und eine Feststellvorrichtung des Gelenks. Die untere Befestigung umfasst eine lösbare Arretiervorrichtung. Die Deckplatte ist in einer geschlossenen Position von der oberen und der unteren Befestigung gehalten.

Die DE 10 2015 214 781 A1 offenbart eine Vorrichtung gemäß dem Oberbegriff des Patentanspruchs 1 und betrifft eine Verstellvorrichtung mit wenigstens einer Verschlussklappe zum zumindest teilweisen Verschließen einer Verschlussöffnung an einem Fahrzeug, über die bei geöffneter Verschlussklappe ein Anschlusselement für das Anschließen einer Leitung und/oder eine Befüllungsöffnung für das Nachfüllen einer Flüssigkeit zugänglich ist. Ein mit einem Antrieb gekoppeltes Hebelwerk mit mindestens zwei um verschiedene Schwenkachsen schwenkbaren Schwenkhebeln sind vorgesehen, über das eine Verstellkraft zum fremdkraftbetätigten Verstellen der Verschlussklappe übertragbar ist.

Die US 6,286,260 B1 offenbart einen Kleintransporter mit einem erweiterten Fahrerhaus-Fahrgastraum und einem Paar Vordertüren, die auf gegenüberliegenden Seiten des Fahrgastraums angeordnet sind. Eine hintere Schiebetür ist hinter einer der beiden vorderen Türen angeordnet. Die hintere Schiebetür wird für die Schiebebewegung zwischen einer geschlossenen und einer geöffneten Position durch eine obere Schiene und ein Paar untere Schienen gestützt, die jeweils von einem entsprechenden Führungsarm ergriffen werden, der an der hinteren Schiebetür montiert ist. Die oberen und unteren Schienen sind so montiert, dass sie in der geschlossenen Stellung der hinteren Schiebetür nicht sichtbar sind.

Die GB 824 780 A offenbart eine weitere Fahrzeugtür für einen Personenkraftwagen.

Die US 2015/375630 A1 betrifft eine Türbaugruppe für eine Ladeöffnung für ein Elektrofahrzeug. Die Türbaugruppe kann eine Verbindungsbaugruppe enthalten, die an der Rückseite einer Ladeöffnungstür angebracht ist, um einen Schwenkbetrieb auszuführen, wobei die Tür in einer Struktur angebracht ist, die in der Lage ist, bei geöffneter Tür entsprechend dem Schwenkbetrieb auf einem Mindestabstand zwischen der Tür und einer Fahrzeugkarosserie gehalten zu werden.

Der Erfindung liegt die Aufgabe zu Grunde, eine alternative und/oder verbesserte Vorrichtung zum Verkleiden eines Nutzfahrzeugs, vorzugsweise eines Lastkraftwagens, zu schaffen.

Die Aufgabe wird gelöst durch die Merkmale gemäß dem unabhängigen Anspruch 1. Vorteilhafte Weiterbildungen sind in den abhängigen Ansprüchen und der Beschreibung angegeben.

Die Vorrichtung zum Verkleiden eines Nutzfahrzeugs, vorzugsweise eines Lastkraftwagens, weist eine Außenseitenverkleidung, vorzugsweise eine Längsaußenseitenverkleidung, auf. Die Vorrichtung weist eine (z. B. einteilige oder mehrteilige) Halterung zum Halten der Außenseitenverkleidung am Nutzfahrzeug auf. Die Vorrichtung weist eine Schwenkvorrichtung auf, die die Außenseitenverkleidung vorzugsweise im Wesentlichen horizontal parallelverschwenkbar (zum Beispiel zwischen einer Öffnungsstellung und einer Schließstellung der Außenseitenverkleidung) mit der Halterung verbindet.

Die Außenseitenverkleidung muss nicht aufwendig mit Werkzeug demontiert werden, um Zugang zu den dahinter befindlichen Komponenten zu erlangen. Stattdessen kann die Außenseitenverkleidung einfach weggeschwenkt werden. Hinter der Außenseitenverkleidung kann Stauraum generiert werden, der gegen den Zugriff von Dritten geschützt ist. Gleichzeitig kann der Stauraum so abgedichtet sein, dass innenliegende Gegenstände (z. B. Ladekabel usw.) nicht verschmutzen. Die kinematische Verbindung zum Nutzfahrzeug ist dabei besonders vorteilhaft so konstruiert, dass die Außenseitenverkleidung einerseits horizontal und andererseits parallel verschwenkt wird. Die horizontale Verschwenkbarkeit ist dahingehend vorteilhaft, dass bei der Integration der Außenseitenverkleidung im Nutzfahrzeug nicht auf einen von dem Nutzfahrzeug, insbesondere dem Lastkraftwagen, getragenen Aufbau zu achten ist. Dieser Aufbau kann nämlich variabel gestaltet sein, sodass dieser bspw. als Kofferaufbau in Querrichtung über die Außenseitenverkleidung übersteht. Eine vertikale Verschwenkbarkeit der Außenseitenverkleidung könnte dadurch behindert oder eingeschränkt sein. Andererseits ermöglicht die parallele Verschwenkbarkeit, dass nur ein geringer Schwenkradius benötigt wird, z. B. kleiner als 0,5 m, sodass bspw. die Außenseitenverkleidung bspw. auch auf engen Parkplätzen geöffnet werden kann.

Zweckmäßig kann hierin unter dem Ausdruck "horizontal parallelverschwenkbar" eine Kinematik verstanden werden, bei der ein Verschwenken im Wesentlichen nur horizontal stattfindet, d.h. um mindestens eine im Wesentlichen vertikale Schwenkachse geschwenkt wird, wobei eine Ausrichtung der Außenseitenverkleidung beim Verschwenken im Wesentlichen gehalten wird, d. h. die Außenseitenverkleidung ist in deren Öffnungsstellung im Wesentlichen parallel zu deren Ausrichtung in der Schließstellung. Bspw. kann die Außenseitenverkleidung sowohl in deren Schließstellung als auch im deren Öffnungsstellung im Wesentlichen planparallel zu einer Außenlängsseite des Nutzfahrzeugs sein.

Zweckmäßig kann die Halterung am Nutzfahrzeug (fahrzeug-) rahmenfest angeordnet oder verbunden sein. Eine elastische oder gedämpfte Kopplung mit einem Fahrzeugrahmen des Nutzfahrzeugs ist ebenfalls möglich.

In einem Ausführungsbeispiel ist die Schwenkvorrichtung dazu ausgebildet, die Außenseitenverkleidung entlang einer horizontalen, gebogen Bahnkurve im Wesentlichen parallel nach außen zu verschwenken (zum Beispiel aus einer Schließstellung in der Außenseitenverkleidung in eine Öffnungsstellung der Außenseitenverkleidung).

Beispielsweise kann die Schwenkvorrichtung dazu ausgebildet sein, die Außenseitenverkleidung zwischen einer Schließstellung und einer Öffnungsstellung horizontal zu verschwenken, wobei die Außenseitenverkleidung von der Schließstellung zu der Öffnungsstellung parallel nach außen und entlang einer Längsachse des Nutzfahrzeugs (zum Beispiel mit oder entgegen einer Vorwärtsfahrtrichtung des Nutzfahrzeugs) verschwenkt wird.

In einer Weiterbildung weist die Schwenkvorrichtung eine erste Vertikalschwenkachse, die an der Halterung gehalten ist, eine zweite Vertikalschwenkachse, die an der Außenseitenverkleidung (zum Beispiel innen) gehalten ist, und/oder mindestens eine Verbindungsstange, die die erste Vertikalschwenkachse mit der zweiten Vertikalschwenkachse verbindet, auf.

Zweckmäßig kann die mindestens eine Verbindungsstange horizontal ausgerichtet sein.

Es ist möglich, dass die Vertikalschwenkachsen durch eine obere Verbindungsstange und/oder eine untere Verbindungsstange verbunden sind.

In einer Weiterbildung ist die erste Vertikalschwenkachse drehbar oder starr an der Halterung gehalten. Alternativ oder zusätzlich ist die zweite Vertikalschwenkachse drehbar oder starr an der Außenseitenverkleidung gehalten. Die mindestens eine Verbindungsstange kann zweckmäßig starr oder schwenkbar an der ersten Vertikalschwenkachse und/oder starr oder schwenkbar an der zweiten Vertikalschwenkachse gehalten sein.

In einem Ausführungsbeispiel ist die mindestens eine Verbindungsstange, vorzugsweise nach innen, gebogen ausgeführt. Damit kann ermöglicht werden, dass zusätzlicher Bauraum an einer Innenseite der Außenseitenverkleidung zur Verfügung steht.

In einem weiteren Ausführungsbeispiel weist die Vorrichtung ferner eine Führungsstange auf. Zweckmäßig ist die Führungsstange an einem Ende (zum Beispiel horizontal) schwenkbar an der Halterung und/oder an einem entgegengesetzten Ende (zum Beispiel horizontal) schwenkbar an der Außenseitenverkleidung gehalten. Beispielsweise kann die Führungsstange die Außenseitenverkleidung während des Verschwenkens parallel zu deren ursprünglicher Ausrichtung führen.

In einer Weiterbildung weist die Führungsstange einen Verstellmechanismus, vorzugsweise eine Gewindestange, zum Verändern einer (z. B. wirksamen) Axiallänge der Führungsstange auf, vorzugsweise zum Einstellen einer Ausrichtung der Außenseitenverkleidung in einer Schließstellung der Außenseitenverkleidung. Hiermit können beispielsweise Montagetoleranzen ausgeglichen werden und eine im Wesentlichen planparallele Ausrichtung der Außenseitenverkleidung zur Längsaußenseite des Nutzfahrzeugs eingestellt werden.

In einer Ausführungsform weist die Vorrichtung ferner eine Federvorrichtung, vorzugsweise eine Gasdruckfedervorrichtung, auf. Die Federvorrichtung kann zweckmäßig an einem Ende (zum Beispiel horizontal) schwenkbar an der Halterung und/oder an einem entgegengesetzten Ende (zum Beispiel horizontal) schwenkbar an der Außenseitenverkleidung gehalten sein, vorzugsweise zur Öffnungsunterstützung, Halteunterstützung in einer Öffnungsstellung und/oder Schließunterstützung der Außenseitenverkleidung.

In einer weiteren Ausführungsform weist die Vorrichtung ferner eine Verriegelungsvorrichtung auf, die zum wahlweisen Verriegeln oder Entriegeln der Außenseitenverkleidung in einer Schließstellung der Außenseitenverkleidung ausgebildet ist. Die Außenseitenverkleidung ist damit abschließbar, sodass die hinter der Außenseitenverkleidung liegenden Elemente geschützt vor dem Zugriff Dritter sind.

Zweckmäßig kann im entriegelten Zustand der Verriegelungsvorrichtung ein Verschwenken der Außenseitenverkleidung aus einer Schließstellung der Außenseitenverkleidung freigegeben sein und/oder im verriegelten Zustand der Verriegelungsvorrichtung ein Verschwenken der Außenseitenverkleidung aus einer Schließstellung der Außenseitenverkleidung gesperrt bzw. verriegelt sein.

Beispielsweise kann die Verriegelungsvorrichtung in der Außenseitenverkleidung integriert sein oder außerhalb der Außenseitenverkleidung zum Beispiel an der Halterung vorgesehen sein.

In einer Weiterbildung ist die Verriegelungsvorrichtung mittels einer Zentralverriegelung des Nutzfahrzeugs verriegelbar und/oder entriegelbar. Alternativ oder zusätzlich ist die Verriegelungsvorrichtung mittels eines Schlüssels (z. B. mechanischer Schlüssel oder Funkschlüssel) verriegelbar und/oder entriegelbar.

In einer Ausführungsvariante weist die Vorrichtung ferner einen Ladesteckeranschluss auf, der in einer Schließstellung der Außenseitenverkleidung von der Außenseitenverkleidung abgedeckt und in einer Öffnungsstellung der Außenseitenverkleidung von außen zugänglich ist.

In einer weiteren Ausführungsvariante weist die Vorrichtung ferner ein Ladekabel auf, das in einer Schließstellung der Außenseitenverkleidung von der Außenseitenverkleidung abgedeckt und in einer Öffnungsstellung der Außenseitenverkleidung von außen zugänglich und herausnehmbar ist.

Zweckmäßig kann die Vorrichtung ferner eine Kabeltrommel für das Ladekabel aufweisen, die in einer Schließstellung der Außenseitenverkleidung von der Außenseitenverkleidung abgedeckt und in einer Öffnungsstellung der Außenseitenverkleidung von außen zugänglich ist.

In einem Ausführungsbeispiel weist die Vorrichtung einen Radkeil auf, der in einer Schließstellung der Außenseitenverkleidung von der Außenseitenverkleidung abgedeckt und in einer Öffnungsstellung der Außenseitenverkleidung von außen zugänglich und herausnehmbar ist.

In einem weiteren Ausführungsbeispiel weist die Vorrichtung ein Staufach auf, das in einer Schließstellung der Außenseitenverkleidung von der Außenseitenverkleidung abgedeckt und in einer Öffnungsstellung der Außenseitenverkleidung von außen zugänglich ist.

In einer Ausführungsform weist die Vorrichtung ferner einen Befüllanschluss auf, vorzugsweise zum Einleiten von Druckluft in eine Druckluftanlage des Nutzfahrzeugs. Der Befüllanschluss ist in einer Schließstellung der Außenseitenverkleidung von der Außenseitenverkleidung abgedeckt und in einer Öffnungsstellung der Außenseitenverkleidung von außen zugänglich.

In einer weiteren Ausführungsform ist die Außenseitenverkleidung rahmenlos und/oder ist die Außenseitenverkleidung eine fahrzeugheckseitige Außenseitenverkleidung und/oder eine Vorderkante der Außenseitenverkleidung bildet zumindest teilweise einen Radlauf. Damit kann ein verfügbarer Stauraum hinter der Außenseitenverkleidung besonders geräumig sein.

Zweckmäßig kann die Außenseitenverkleidung eine Länge von mindestens 1 m, vorzugweise zwischen 1 m und 1,5 m, aufweisen. Alternativ oder zusätzlich kann die Außenseitenverkleidung eine Höhe von mindestens 0,4 m, vorzugweise zwischen 0,5 m und 1 m, aufweisen.

In einer Ausführungsvariante weist die Außenseitenverkleidung eine oder mehrere Lufteinlässe auf. Über die Lufteinlässe kann während der Fahrt des Nutzfahrzeugs Kühlluft in das Innere des Nutzfahrzeugs gelangen. Vorzugsweise ist der eine oder sind die mehreren Lufteinlässe kiemenförmig, lamellenförmig und/oder als Lüftungsschlitze ausgebildet.

Zweckmäßig kann der eine oder können die mehreren Lufteinlässe vertikal ausgerichtet sein.

Die Erfindung betrifft auch ein Nutzfahrzeug, vorzugsweise einen Lastkraftwagen, aufweisend die Vorrichtung wie hierin offenbart. Vorzugsweise ist die Außenseitenverkleidung (z. B. direkt) unterhalb eines Aufbaus, vorzugsweise eines Kofferaufbaus, des Nutzfahrzeugs angeordnet, vorzugsweise zurückversetzt (z. B. in einer Querrichtung des Nutzfahrzeugs) bezüglich des Aufbaus.

In einem Ausführungsbeispiel ist die Außenseitenverkleidung bezüglich einer Vorwärtsfahrtrichtung des Nutzfahrzeugs hinter einer Hinterachse des Nutzfahrzeugs angeordnet.

In einem weiteren Ausführungsbeispiel ist die Außenseitenverkleidung bezüglich einer Vorwärtsfahrtrichtung des Nutzfahrzeugs aus einer Schließstellung der Außenseitenverkleidung nach vorne schwenkbar.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines Heckbereichs eines Nutzfahrzeugs mit einer Außenseitenverkleidung in einer Schließstellung gemäß der vorliegenden Offenbarung;
- Figur 2: eine perspektivische Ansicht der Außenseitenverkleidung in der Schließstellung;
- Figur 3: eine perspektivische Ansicht des Heckbereichs des Nutzfahrzeugs mit der Außenseitenverkleidung in einer Öffnungsstellung;
- Figur 4: eine perspektivische Ansicht der Außenseitenverkleidung in der Öffnungsstellung;
- Figur 5: eine perspektivische Ansicht des Heckbereichs des Nutzfahrzeugs mit Aufbau und der Außenseitenverkleidung in der Öffnungsstellung;
- Figur 6: eine Heckansicht eines Abschnitts des Nutzfahrzeugs mit Aufbau und der Außenseitenverkleidung in der Öffnungsstellung;
- Figur 7: eine perspektivische Ansicht einer Innenseite der Außenseitenverkleidung in der Schließstellung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

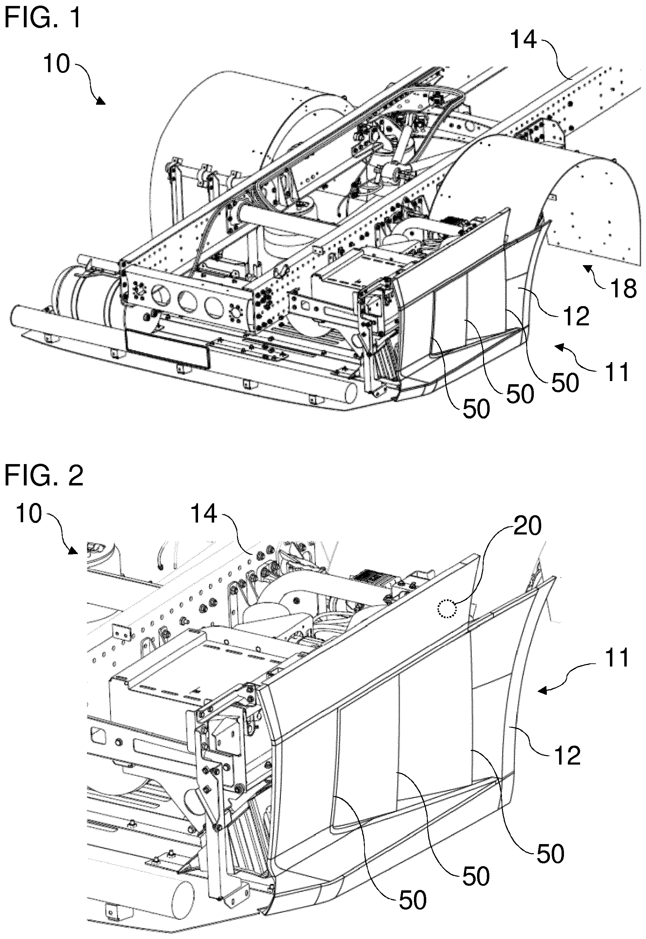

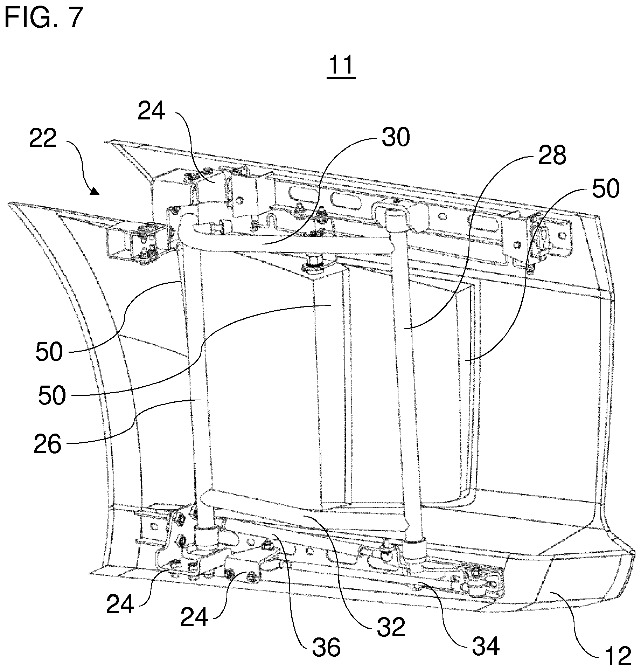

In den Figuren 1 bis 6 ist ein Heckbereich eines Nutzfahrzeugs 10 mit einer Vorrichtung 11 zum Verkleiden des Nutzfahrzeugs 10 gezeigt. Die Figur 7 zeigt die Vorrichtung 11 mit einer schwenkbaren Außenseitenverkleidung 12 in einer Einzeldarstellung. Nachfolgend ist unter Bezugnahme auf die Figuren 1 bis 7 ein Ausführungsbeispiel für das Nutzfahrzeug 10 und die Vorrichtung 11 beschrieben.

Das Nutzfahrzeug 10 kann insbesondere als ein Lastkraftwagen ausgebildet sein. Vorzugsweise kann das Nutzfahrzeug 10 als ein Elektro- Nutzfahrzeug mit einem Elektro-Antrieb oder ein Hybrid- Nutzfahrzeug, der zumindest auch einen Elektro-Antrieb aufweist, ausgebildet sein.

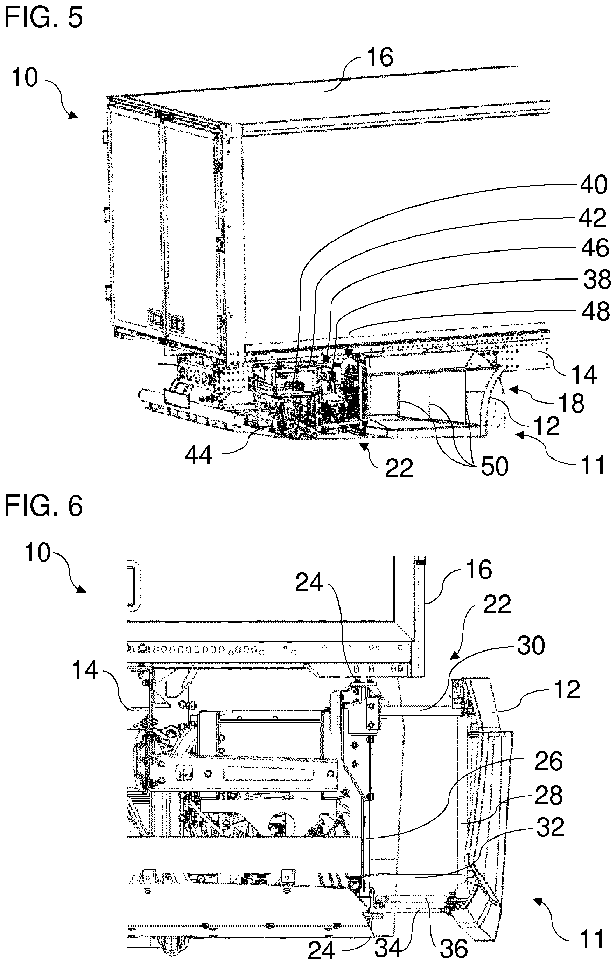

Das Nutzfahrzeug 10 weist einen Fahrzeugrahmen 14, zum Beispiel in Form eines Leiterrahmens oder eines Gitterrahmens oder einer Gerippestruktur, auf. Das Nutzfahrzeug 10 kann zudem einen Aufbau 16 aufweisen (siehe Figuren 5 und 6). Der Aufbau 16 wird von dem Fahrzeugrahmen 14 getragen. Der Aufbau 16 kann Ladefläche zum Transport von Waren bereitstellen. Wie dargestellt ist, kann der Aufbau 16 beispielsweise ein Kofferaufbau sein.

Die Vorrichtung 11 ist an einer Längsaußenseite des Nutzfahrzeugs 10 angeordnet. Die Vorrichtung 11 ist in einem Heckbereich des Nutzfahrzeugs 10 angeordnet bzw. weist eine heckseitige Außenseitenverkleidung 12 auf. Insbesondere sind die Vorrichtung 11 und die Außenseitenverkleidung 12 bezüglich einer Vorwärtsfahrtrichtung des Nutzfahrzeugs hinter einer Hinterachse 18 (nicht im Detail dargestellt) angeordnet. Zweckmäßig kann die Außenseitenverkleidung 12 rahmenlos ausgeführt sein, wie dargestellt ist. Eine Vorderkante der Außenseitenverkleidung 12 kann einen Radlauf für die Hinterachse 18 bilden. Eine Hinterkante der Außenseitenverkleidung 12 kann eine Längsaußenseite des Nutzfahrzeugs 10 nach hinten begrenzen.

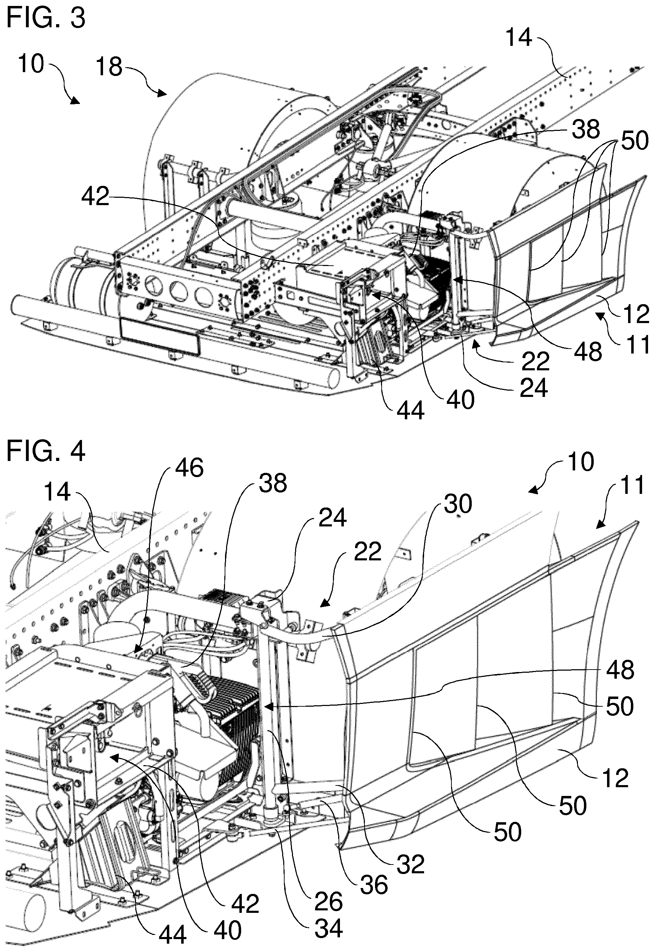

Die Außenseitenverkleidung 12 ist zwischen einer Schließstellung (siehe Figuren 1, 2 und 7) und einer Öffnungsstellung (siehe Figuren 3 bis 6) verschwenkbar. In der Schließstellung deckt die Außenseitenverkleidung 12 eine Reihe von Komponenten und Benutzerschnittstellen des Nutzfahrzeugs 10 ab und schützt diese beispielsweise vor Verschmutzung zum Beispiel während der Fahrt des Nutzfahrzeugs 10. In der Öffnungsstellung ermöglicht die Außenseitenverkleidung 12 einen Zugang zu den genannten Komponenten und Benutzerschnittstellen des Nutzfahrzeugs 10. Somit kann auf die Komponenten und Benutzerschnittstellen zugegriffen werden, wenn das Nutzfahrzeug 10 beispielsweise parkt und die Außenseitenverkleidung 12 in die Öffnungsstellung verschwenkt wird.

Die Außenseiterverkleidung 12 ist unterhalb des Aufbaus 16 angeordnet. Zweckmäßig steht der Aufbau 16 bezüglich einer Querachse des Nutzfahrzeugs 10 über die Außenseitenverkleidung 12 über, wenn die Außenseiterverkleidung in deren Schließstellung ist. In anderen Worten, die Außenseitenverkleidung 12 ist in deren Schließstellung bezüglich der Querachse des Nutzfahrzeugs 10 zurückversetzt. Der so resultierende Überstand des Aufbaus 16 kann eine Konstruktion zum Verschwenken der Außenseitenverkleidung 12 nach oben zum Öffnen der Außenseitenverkleidung verkomplizieren. Daher ist die Außenseitenverkleidung 12 zweckmäßig horizontal verschwenkbar.

Um ferner einen geringen Schwenkradius von beispielsweise kleiner als 0,5 Meter zu ermöglichen, ist die Außenseitenverkleidung 12 parallel verschwenkbar, sodass die Außenseitenverkleidung 12 beim Öffnen parallel zu deren Ausrichtung in deren Schließstellung nach außen schwenkt. Eine Bahnkurve der Schwenkbewegung beim Öffnen und Schließen kann im Wesentlichen bogenförmig sein, wobei eine parallele Ausrichtung der Außenseitenverkleidung 12 mit einer Außenlängsseite des Nutzfahrzeugs 10 beim Verschwenken gehalten wird. Die Bahnkurve kann sich innerhalb einer Horizontalebene erstrecken Zweckmäßig kann die Außenseitenverkleidung 12 in einer Vorwärtsfahrtrichtung des Nutzfahrzeugs 10 parallelverschwenkbar sein, wie dargestellt ist. Es ist allerdings auch möglich, dass die Außenseitenverkleidung 12 entgegen einer Vorwärtsfahrtrichtung des Nutzfahrzeugs 10 parallelverschwenkbar ist.

De Außenseitenverkleidung 12 kann bspw. eine Länge von mindestens 1 m, vorzugweise zwischen 1 m und 1,5 m, und eine Höhe von mindestens 0,4 m, vorzugweise zwischen 0,5 m und 1 m, aufweisen.

Die Vorrichtung 11 kann eine Verriegelungsvorrichtung 20 (lediglich schematisch in Figur 2 angedeutet) aufweisen. Mittels der Verriegelungsvorrichtung 20 kann die Außenseitenverkleidung wie bspw. eine verschließbare Tür in der Schließstellung verriegelt werden. Im verriegelten Zustand ist die Außenseitenverkleidung 12 nicht öffenbar. Das heißt, sie kann nicht aus der Schließstellung in die Öffnungsstellung verschwenkt werden. Wenn die Verriegelungsvorrichtung 20 entriegelt wird, kann die Außenseitenverkleidung 12 aus der Schließstellung in die Öffnungsstellung verschwenkt werden. Die Verriegelungsvorrichtung 20 ermöglicht, dass die hinter der Außenseitenverkleidung 12 angeordneten Komponenten und Benutzerschnittstellen vor unbefugten Zugriff von außen geschützt sind, wenn die Außenseitenverkleidung 12 in der Schließstellung ist und die Verriegelungsvorrichtung 20 verriegelt ist. Die Verriegelungsvorrichtung 20 kann mit einer Zentralverriegelung des Nutzfahrzeugs 10 gekoppelt oder koppelbar sein. Die Verriegelungsvorrichtung 20 kann mittels eines Schlüssels (zum Beispiel mechanischer Schlüssel oder Funkschlüssel) verriegelbar und entriegelbar sein.

Die Verschwenkbarkeit der Außenseitenverkleidung 12 wird durch eine Schwenkvorrichtung 22 der Vorrichtung 11 ermöglicht. Die Schwenkvorrichtung 22 verbindet die Außenseitenverkleidung 12 schwenkbar mit einer Halterung 24 der Vorrichtung 11. Die Halterung 24 kann rahmenfest am Nutzfahrzeug 10 verbaut sein. Die Halterung 24 kann beispielsweise direkt oder indirekt, wie dargestellt ist, mit dem Fahrzeugrahmen 14 verbunden sein. Die Halterung 24 kann einteilig oder mehrteilig ausgeführt sein.

Die Schwenkvorrichtung 22 weist eine erste Vertikalschwenkachse 26 und eine zweite Vertikalschwenkachse 28 auf. Die erste Vertikalschwenkachse 26 ist direkt an der Halterung 24 gehalten. Die zweite Vertikalschwenkachse 28 ist direkt an einer Innenseite der Außenseitenverkleidung 12 gehalten. Die Vertikalschwenkachsen 26, 28 sind miteinander über eine obere und eine untere Verbindungsstange 30, 32 miteinander verbunden. Die Verbindungsstangen 30, 32 können gebogen, vorzugsweise nach innen gebogen, ausgeführt sein, um beispielsweise zusätzlichen Bauraum an der Innenseite der Außenseitenverkleidung 12 zu schaffen. Es ist auch möglich, mehr oder weniger Verbindungsstangen zwischen den Vertikalschwenkachsen 26 und 28 anzuordnen.

In der dargestellten Ausführungsform ist die erste Vertikalschwenkachse 26 drehbar von der Halterung 24 gehalten, sodass sie in einer Umfangsrichtung der ersten Vertikalschwenkachse 26 drehbar ist. Zweckmäßig kann die erste Vertikalschwenkachse 26 an deren entgegengesetzten Enden drehbar von der Halterung 24 gehalten werden, zum Beispiel in Gleitlagern oder Kugellagern. Die zweite Vertikalschwenkachse 28 ist drehbar an einer Innenseite der Außenseitenverkleidung 12 gehalten, sodass sie in einer Umfangsrichtung der zweiten Vertikalschwenkachse 28 drehbar ist. Zweckmäßig kann die zweite Vertikalschwenkachse 28 an deren entgegengesetzten Enden drehbar von der Außenseitenverkleidung 12 gehalten werden, zum Beispiel in Gleitlagern oder Kugellagern. Die Vertikalschwenkachsen 26 und 28 sind starr durch die Verbindungsstangen 30, 32 miteinander verbunden. Beim Öffnen der Außenseitenverkleidung 12 drehen sich die beiden Vertikalschwenkachsen 26, 28, sodass die horizontale Parallelverschwenkung der Außenseitenverkleidung 12 ermöglicht wird. Es ist allerdings beispielsweise auch möglich, dass eine oder beide der Vertikalschwenkachsen 26, 28 starr gehalten sind und ein jeweiliges Ende der Verbindungsstangen 30, 32 horizontal schwenkbar mit der jeweils starr gehaltenen Vertikalschwenkachse 26 oder 28 verbunden ist.

Die Schwenkvorrichtung 22 kann eine Führungsstange 34 aufweisen. Die Führungsstange 34 kann in einem unteren Bereich der Vorrichtung 11 angeordnet sein. Die Führungsstange 34 kann an einem Ende schwenkbar mit der Halterung 24 und an einem entgegengesetzten Ende schwenkbar mit der Außenseitenverkleidung 12 verbunden sein. Die Schwenkachsen sind jeweils vertikal ausgerichtet, sodass die Führungsstange 34 an beiden Enden jeweils horizontal bzw. in einer Horizontalebene verschwenkbar ist.

Die Führungsstange 34 kann die mögliche Schwenkbewegung der Außenseitenverkleidung 12 so beschränken, dass es zum Parallelverschwenken der Außenseitenverkleidung 12 beim Öffnen und Schließen kommt. Eine Länge der Führungsstange 34 kann einstellbar sein, zum Beispiel mittels einer Gewindestange. Damit kann beispielsweise eine Ausrichtung der Außenseitenverkleidung 12 in deren Schließstellung eingestellt werden.

Die Schwenkvorrichtung 22 kann zweckmäßig eine Federvorrichtung 36 aufweisen. Die Federvorrichtung 36 kann in einem unteren Bereich der Vorrichtung 11 angeordnet sein. Die Federvorrichtung 36 kann insbesondere als eine Gasdruckfeder ausgebildet sein, wie dargestellt ist. Die Federvorrichtung 36 kann an einem Ende schwenkbar mit der Halterung 24 und an einem entgegengesetzten Ende schwenkbar mit der Außenseitenverkleidung 12 verbunden sein. Die Schwenkachsen sind jeweils vertikal ausgerichtet, sodass die Federvorrichtung 36 an beiden Enden jeweils horizontal bzw. in einer Horizontalebene verschwenkbar ist.

Die Federvorrichtung 36 kann einen Kraftaufwand eines Benutzers beim Öffnen und Schließen der Außenseitenverkleidung 12 verringern. Der Benutzer wird so beim Öffnen und Schließen der Außenseitenverteilung 12 unterstützt. Die Federvorrichtung 36 kann beispielsweise so ausgeführt sein, dass sie erst wirkt, wenn eine Schwenkbewegung der Außenseitenverkleidung 12 beim Öffnen und/oder Schließen einen gewissen Punkt überschreitet. Die Kraftunterstützung durch die Federvorrichtung 36 beginnt nicht sofort bei Beginn der Schwenkbewegung, sondern erst in einem späteren Schwenkbereich beim Öffnen und/oder Schließen der Außenseitenverkleidung 12. Beispielsweise kann die Kraftunterstützung erst ab 1/4, 1/3 oder 1/2 einer Bahnlänge der Schwenkbewegung beim Öffnen und/oder Schließen der Außenseitenverkleidung einsetzen.

Wie bereits erwähnt, können hinter der Außenseitenverkleidung 12 eine Vielzahl von Benutzerschnittstellen und Komponenten des Nutzfahrzeugs 10 angeordnet sein, die erst durch Verschwenken der Außenseitenverkleidung 12 in deren Öffnungsstellung zugänglich sind.

Besonders bevorzugt kann ein elektrischer Ladesteckeranschluss 38 hinter der Außenseitenverkleidung 12 angeordnet sein. Über den elektrischen Ladesteckeranschluss 38 kann eine Traktionsbatterie (nicht dargestellt) des Nutzfahrzeugs 10 geladen werden.

Um eine möglichst einfache Verbindung des Ladesteckeranschlusses 38 mit einer stationären Ladestation (nicht dargestellt) zu ermöglichen, kann ein elektrisches Ladekabel 40 in einem Staufach 42 hinter der Außenseitenverkleidung 12 angeordnet sein. Das elektrische Ladekabel 40 kann aus dem Staufach 42 heraus genommen werden, wenn die Außenseitenverkleidung 12 in der Öffnungsstellung ist. Das Ladekabel 40 kann dann den Ladesteckeranschluss 38 mit der stationären Ladestation zum Laden der Traktionsbatterie des Nutzfahrzeugs 10 elektrisch verbinden. Es ist möglich, dass das Ladekabel 40 auf einer beispielsweise herausnehmbaren Kabeltrommel aufgerollt ist, die in dem Staufach 42 positioniert werden kann. Es ist auch möglich weitere oder alternative Staufächer für andere Zubehörteile hinter der Außenseitenverkleidung 12 anzuordnen.

Es ist auch möglich, einen oder mehrere herausnehmbare Parkkeile bzw. Radkeile 44 hinter der Außenseitenverkleidung 12 zu positionieren. Der Radkeil 44 ist somit, wenn er nicht benötigt wird, nahe seines Einsatzorts an der Hinterachse 18 sicher verstaut. Der Radkeil 44 ermöglicht es, ein Wegrollen der Räder beispielsweise der Hinterachse 18 des Nutzfahrzeugs 10 an einem Hang zu verhindern, wenn das Nutzfahrzeug 10 parkt. Dazu wird der Radkeil 44 einfach zwischen einem hangabwärts gerichteten Bereich einer Umfangsfläche eines Rads und einem Untergrund, auf dem das Rad steht, positioniert.

Zweckmäßig kann auch ein oder mehrere Befüllanschlüsse 46 beispielsweise für eine Druckluftanlage 48 des Nutzfahrzeugs 10 hinter der Außenseitenverkleidung 12 angeordnet sein. Die Druckluftanlage 48 kann beispielsweise Teil einer pneumatischen Feststell- und/oder Betriebsbremse des Nutzfahrzeugs 10 sein. Wenn beispielsweise ein Luftpresser der Druckluftanlage 48 ausfällt, kann die Feststellbremse des Nutzfahrzeugs 10 bequem extern durch Anschließen einer Druckluftquelle an dem Befüllanschluss 46 gelöst werden. Es ist beispielsweise auch möglich, die Druckluftanlage 48 durch Anschließen einer Druckluftquelle mit Druckluft aufzufüllen, wenn das Nutzfahrzeug 10 beispielsweise länger stillgelegt war, zum Beispiel mehrere Wochen. In der dargestellten Ausführungsvariante ist der Befüllanschluss 46 nicht direkt sichtbar, sondern bspw. in Figur 4 von dem Staufach 42 und in Figur 5 von dem Ladesteckeranschluss 38 verdeckt.

Neben den hier beispielhaft genannten Komponenten und Benutzerschnittstellen können selbstverständlich weitere und/oder alternative Komponenten und/oder Benutzerschnittstellen hinter der Außenseitenverkleidung 12 angeordnet werden, die erst zugänglich sind, wenn die Außenseitenverkleidung 12 geöffnet ist.

Die Außenseitenverkleidung 12 kann ferner mehrere Lufteinlässe 50 aufweisen. Die Lufteinlässe 50 können, wie dargestellt ist, als kiemen- oder lamellenförmige Lüftungsschlitze ausgeführt sein. Durch die Lufteinlässe 50 kann während der Fahrt des Nutzfahrzeugs 10 Kühlluft in einen Bereich hinter der Außenseitenverkleidung 12 zugeführt werden, mit der die hinter der Außenseitenverkleidung angeordneten Komponenten umströmt und gekühlt werden können. Hierzu können beispielsweise eine zweckmäßig elektrische Antriebseinrichtung und elektrische Hochvolt- und/oder Niedervolt-Komponenten zählen.

### Bezugszeichenliste

- 10: Nutzfahrzeug
- 11: Vorrichtung zum Verkleiden
- 12: Außenseitenverkleidung
- 14: Fahrzeugrahmen
- 16: Aufbau
- 18: Hinterachse
- 20: Verriegelungsvorrichtung
- 22: Schwenkvorrichtung
- 24: Halterung
- 26: Erste Vertikalschwenkachse
- 28: Zweite Vertikalschwenkachse
- 30: Obere Verbindungsstange
- 32: Untere Verbindungsstangen
- 34: Führungsstange
- 36: Federvorrichtung
- 38: Ladesteckeranschluss
- 40: Ladekabel
- 42: Staufach
- 44: Radkeil
- 46: Befüllanschluss
- 48: Druckluftanlage
- 50: Lufteinlass

## Patentansprüche

1. Vorrichtung (11) zum Verkleiden eines Nutzfahrzeugs (10), vorzugsweise eines Lastkraftwagens, aufweisend:
eine Außenseitenverkleidung (12), vorzugsweise eine Längsaußenseitenverkleidung;
eine Halterung (24) zum Halten der Außenseitenverkleidung (12) am Nutzfahrzeug (10);
eine Schwenkvorrichtung (22), die die Außenseitenverkleidung (12) im Wesentlichen horizontal parallelverschwenkbar mit der Halterung (24) verbindet, und
eine Führungsstange (34), die an einem Ende schwenkbar an der Halterung (24) und an einem entgegengesetzten Ende schwenkbar an der Außenseitenverkleidung (12) gehalten ist,
**dadurch gekennzeichnet, dass**
die Führungsstange (34) einen Verstellmechanismus, vorzugsweise eine Gewindestange, zum Verändern einer Axiallänge der Führungsstange (34) aufweist, vorzugsweise zum Einstellen einer Ausrichtung der Außenseitenverkleidung (12) in einer Schließstellung der Außenseitenverkleidung (12).

2. Vorrichtung (11) nach Anspruch 1, wobei:
die Schwenkvorrichtung (22) dazu ausgebildet ist, die Außenseitenverkleidung (12) entlang einer horizontalen, gebogen Bahnkurve im Wesentlichen parallel nach außen zu verschwenken.

3. Vorrichtung (11) nach Anspruch 1 oder Anspruch 2, wobei die Schwenkvorrichtung (22) aufweist:
eine erste Vertikalschwenkachse (26), die an der Halterung (24) gehalten ist;
eine zweite Vertikalschwenkachse (28), die an der Außenseitenverkleidung (12) gehalten ist; und
mindestens eine Verbindungsstange (30, 32), die die erste Vertikalschwenkachse (26) mit der zweiten Vertikalschwenkachse (28) verbindet.

4. Vorrichtung (11) nach Anspruch 3, wobei:
die erste Vertikalschwenkachse (26) drehbar oder starr an der Halterung (24) gehalten ist; und/oder
die zweite Vertikalschwenkachse (28) drehbar oder starr an der Außenseitenverkleidung (12) gehalten ist; und/oder
die mindestens eine Verbindungsstange (30, 32) starr oder schwenkbar an der ersten Vertikalschwenkachse (26) gehalten ist; und/oder
die mindestens eine Verbindungsstange (30, 32) starr oder schwenkbar an der zweiten Vertikalschwenkachse (28) gehalten ist; und/oder
die mindestens eine Verbindungsstange (30, 32), vorzugsweise nach innen, gebogen ausgeführt ist.

5. Vorrichtung nach einem der vorherigen Ansprüche, ferner aufweisend:
eine Federvorrichtung (36), vorzugsweise eine Gasdruckfedervorrichtung, die an einem Ende schwenkbar an der Halterung (24) und an einem entgegengesetzten Ende schwenkbar an der Außenseitenverkleidung (12) gehalten ist, vorzugsweise zur Öffnungsunterstützung, Halteunterstützung in einer Öffnungsstellung und/oder Schließunterstützung der Außenseitenverkleidung (12).

6. Vorrichtung (11) nach einem der vorherigen Ansprüche, ferner aufweisend:
eine Verriegelungsvorrichtung (20), die zum wahlweisen Verriegeln oder Entriegeln der Außenseitenverkleidung (12) in einer Schließstellung der Außenseitenverkleidung (12) ausgebildet ist.

7. Vorrichtung (11) nach Anspruch 6, wobei:
die Verriegelungsvorrichtung (20) mittels einer Zentralverriegelung des Nutzfahrzeugs (10) verriegelbar und entriegelbar ist; und/oder
die Verriegelungsvorrichtung (20) mittels eines Schlüssels verriegelbar und entriegelbar ist.

8. Vorrichtung (11) nach einem der vorherigen Ansprüche, ferner aufweisend:
einen Ladesteckeranschluss (38), der in einer Schließstellung der Außenseitenverkleidung (12) von der Außenseitenverkleidung (12) abgedeckt und in einer Öffnungsstellung der Außenseitenverkleidung (12) von außen zugänglich ist; und/oder
ein Ladekabel (40), das in einer Schließstellung der Außenseitenverkleidung (12) von der Außenseitenverkleidung (12) abgedeckt und in einer Öffnungsstellung der Außenseitenverkleidung (12) von außen zugänglich und herausnehmbar ist.

9. Vorrichtung (11) nach einem der vorherigen Ansprüche, ferner aufweisend:
einen Radkeil (44), der in einer Schließstellung der Außenseitenverkleidung (12) von der Außenseitenverkleidung (12) abgedeckt und in einer Öffnungsstellung der Außenseitenverkleidung (12) von außen zugänglich und herausnehmbar ist; und/oder
ein Staufach (42), das in einer Schließstellung der Außenseitenverkleidung (12) von der Außenseitenverkleidung (12) abgedeckt und in einer Öffnungsstellung der Außenseitenverkleidung (12) von außen zugänglich ist.

10. Vorrichtung (11) nach einem der vorherigen Ansprüche, ferner aufweisend:
einen Befüllanschluss (46) zum Einleiten von Druckluft in eine Druckluftanlage (48) des Nutzfahrzeugs (10), wobei der Befüllanschluss (46) in einer Schließstellung der Außenseitenverkleidung (12) von der Außenseitenverkleidung (12) abgedeckt und in einer Öffnungsstellung der Außenseitenverkleidung (12) von außen zugänglich ist.

11. Vorrichtung (11) nach einem der vorherigen Ansprüche, wobei:
die Außenseitenverkleidung (12) rahmenlos ist; und/oder
die Außenseitenverkleidung (12) eine fahrzeugheckseitige Außenseitenverkleidung (12) ist; und/oder
eine Vorderkante der Außenseitenverkleidung (12) zumindest teilweise einen Radlauf bildet.

12. Vorrichtung (11) nach einem der vorherigen Ansprüche, wobei:
die Außenseitenverkleidung (12) eine oder mehrere Lufteinlässe (50) aufweist, wobei vorzugsweise:
der eine oder die mehreren Lufteinlässe (50) kiemenförmig, lamellenförmig und/oder als Lüftungsschlitze ausgebildet sind.

13. Nutzfahrzeug (10), vorzugsweise Lastkraftwagen, aufweisend die Vorrichtung (11) nach einem der vorherigen Ansprüche, wobei vorzugsweise:
die Außenseitenverkleidung (12) unterhalb eines Aufbaus (16), vorzugsweise eines Kofferaufbaus, des Nutzfahrzeugs (10) angeordnet ist, vorzugsweise zurückversetzt bezüglich des Aufbaus (16); und/oder
die Außenseitenverkleidung (12) bezüglich einer Vorwärtsfahrtrichtung des Nutzfahrzeugs (10) hinter einer Hinterachse (18) des Nutzfahrzeugs (10) angeordnet ist; und/oder
die Außenseitenverkleidung (12) bezüglich einer Vorwärtsfahrtrichtung des Nutzfahrzeugs (10) aus einer Schließstellung der Außenseitenverkleidung (12) nach vorne schwenkbar ist.

## Claims

1. An arrangement (11) for cladding a commercial vehicle (10), preferably a lorry, comprising:
an outer side cladding (12), preferably a longitudinal outer side cladding;
a holder (24) for holding the outer side cladding (12) on the commercial vehicle (10);
a pivoting device (22) which connects the outer side cladding (12) to the holder (24) such that it can be pivoted in a substantially horizontally parallel manner, and
a guide rod (34) which is pivotably held on the holder (24) at one end and is pivotably held on the outer side cladding (12) at an opposite end,
**characterized in that**
the guide rod (34) has an adjusting mechanism, preferably a threaded rod, for changing an axial length of the guide rod (34), preferably for setting an orientation of the outer side cladding (12) in a closed position of the outer side cladding (12).

2. The arrangement (11) according to Claim 1, wherein:
the pivoting device (22) is designed to pivot the outer side cladding (12) substantially parallel outwards along a horizontal, curved trajectory.

3. The arrangement (11) according to Claim 1 or Claim 2, wherein the pivoting device (22) comprises:
a first vertical pivoting shaft (26) which is held on the holder (24);
a second vertical pivoting shaft (28) which is held on the outer side cladding (12); and
at least one connecting rod (30, 32) which connects the first vertical pivoting shaft (26) to the second vertical pivoting shaft (28).

4. The arrangement (11) according to Claim 3, wherein:
the first vertical pivoting shaft (26) is held rotatably or rigidly on the holder (24); and/or
the second vertical pivoting shaft (28) is held rotatably or rigidly on the outer side cladding (12); and/or
the at least one connecting rod (30, 32) is held rigidly or pivotably on the first vertical pivoting shaft (26); and/or
the at least one connecting rod (30, 32) is held rigidly or pivotably on the second vertical pivoting shaft (28); and/or
the at least one connecting rod (30, 32) is configured to be bent, preferably inwardly.

5. The arrangement according to one of the preceding claims, further comprising:
a spring device (36), preferably a gas spring device, which is held pivotably on the holder (24) at one end and is held pivotably on the outer side cladding (12) at an opposite end, preferably for opening assistance, holding assistance in an open position and/or closing assistance of the outer side cladding (12).

6. The arrangement (11) according to one of the preceding claims, further comprising:
a locking device (20) which is designed for selectively locking or unlocking the outer side cladding (12) in a closed position of the outer side cladding (12).

7. The arrangement (11) according to Claim 6, wherein:
the locking device (20) can be locked and unlocked by means of a central locking system of the commercial vehicle (10); and/or
the locking device (20) can be locked and unlocked by means of a key.

8. The arrangement (11) according to one of the preceding claims, further comprising:
a charging plug connection (38) which, in a closed position of the outer side cladding (12), is covered by the outer side cladding (12) and, in an open position of the outer side cladding (12), is accessible from outside; and/or
a charging cable (40) which, in a closed position of the outer side cladding (12), is covered by the outer side cladding (12) and, in an open position of the outer side cladding (12), is accessible from outside and removable.

9. The arrangement (11) according to one of the preceding claims, further comprising:
a wheel chock (44) which, in a closed position of the outer side cladding (12), is covered by the outer side cladding (12) and, in an open position of the outer side cladding (12), is accessible from outside and removable; and/or
a storage compartment (42) which, in a closed position of the outer side cladding (12), is covered by the outer side cladding (12) and, in an open position of the outer side cladding (12), is accessible from outside.

10. The arrangement (11) according to one of the preceding claims, further comprising:
a filling connection (46) for introducing compressed air into a compressed-air system (48) of the commercial vehicle (10), wherein, in a closed position of the outer side cladding (12), the filling connection (46) is covered by the outer side cladding (12) and, in an open position of the outer side cladding (12), is accessible from outside.

11. The arrangement (11) according to one of the preceding claims, wherein:
the outer side cladding (12) is frameless; and/or
the outer side cladding (12) is a vehicle rearside outer side cladding (12); and/or
a front edge of the outer side cladding (12) at least partially forms a wheel arch.

12. The arrangement (11) according to one of the preceding claims, wherein:
the outer side cladding (12) has one or more air inlets (50), wherein preferably:
the one or more air inlets (50) are gill-shaped, lamellar and/or take the form of ventilation slots.

13. A commercial vehicle (10), preferably a lorry, comprising the arrangement (11) according to one of the preceding claims, wherein preferably:
the outer side cladding (12) is arranged below a body (16), preferably a box body, of the commercial vehicle (10), preferably being set back with respect to the body (16); and/or
the outer side cladding (12) is arranged behind a rear axle (18) of the commercial vehicle (10) with respect to a forward direction of travel of the commercial vehicle (10); and/or
the outer side cladding (12) can be pivoted forward from a closed position of the outer side cladding (12) with respect to a forward direction of travel of the commercial vehicle (10).

## Revendications

1. Dispositif (11) d'habillage d'un véhicule utilitaire (10), de préférence d'un poids lourd, comprenant :
un habillage latéral extérieur (12), de préférence un habillage latéral extérieur longitudinal ;
un dispositif de retenue (24) pour retenir l'habillage latéral extérieur (12) sur le véhicule utilitaire (10) ;
un dispositif de pivotement (22) qui relie l'habillage latéral extérieur (12) au dispositif de retenue (24) de manière sensiblement pivotante parallèlement horizontalement et
une tige de guidage (34) qui est retenue de manière pivotante sur le dispositif de retenue (24) à une extrémité et est retenue de manière pivotante sur l'habillage latéral extérieur (12) à une extrémité opposée,
**caractérisé en ce que**
la tige de guidage (34) comprend un mécanisme de réglage, de préférence une tige filetée, pour la modification d'une longueur axiale de la tige de guidage (34), de préférence pour le réglage d'une orientation de l'habillage latéral extérieur (12) dans une position de fermeture de l'habillage latéral extérieur (12).

2. Dispositif (11) selon la revendication 1, dans lequel :
le dispositif de pivotement (22) est conçu pour pivoter l'habillage latéral extérieur (12) sensiblement parallèlement vers l'extérieur le long d'une trajectoire horizontale incurvée.

3. Dispositif (11) selon la revendication 1 ou la revendication 2, dans lequel le dispositif de pivotement (22) comprend :
un premier axe de pivotement vertical (26) qui est retenu sur le dispositif de retenue (24) ;
un deuxième axe de pivotement vertical (28) qui est retenu sur l'habillage latéral extérieur (12) ; et
au moins une tige de liaison (30, 32) qui relie le premier axe de pivotement vertical (26) au deuxième axe de pivotement vertical (28).

4. Dispositif (11) selon la revendication 3, dans lequel :
le premier axe de pivotement vertical (26) est retenu de manière bloquée en rotation ou rigide sur le dispositif de retenue (24) ; et/ou
le deuxième axe de pivotement vertical (28) est retenu de manière bloquée en rotation ou rigide sur l'habillage latéral extérieur (12) ; et/ou
l'au moins une tige de liaison (30, 32) est retenue de manière rigide ou pivotante sur le premier axe de pivotement vertical (26) ; et/ou
l'au moins une tige de liaison (30, 32) est retenue de manière rigide ou pivotante sur le deuxième axe de pivotement vertical (28) ; et/ou
l'au moins une tige de liaison (30, 32) est réalisée de manière incurvée de préférence vers l'intérieur.

5. Dispositif selon l'une des revendications précédentes, comprenant en outre :
un dispositif ressort (36), de préférence un dispositif ressort pneumatique, qui est retenu de manière pivotante sur le dispositif de retenue (24) à une extrémité et est retenu de manière pivotante sur l'habillage latéral extérieur (12) à une extrémité opposée, de préférence pour faciliter l'ouverture, faciliter le maintien dans une position d'ouverture et/ou faciliter la fermeture de l'habillage latéral extérieur (12).

6. Dispositif (11) selon l'une des revendications précédentes, comprenant en outre :
un dispositif de verrouillage (20) qui est conçu pour verrouiller ou déverrouiller sélectivement l'habillage latéral extérieur (12) dans une position de fermeture de l'habillage latéral extérieur (12).

7. Dispositif (11) selon la revendication 6, dans lequel :
le dispositif de verrouillage (20) peut être verrouillé et peut être déverrouillé au moyen d'un verrouillage centralisé du véhicule utilitaire (10) ; et/ou le dispositif de verrouillage (20) peut être verrouillé et peut être déverrouillé au moyen d'une clé.

8. Dispositif (11) selon l'une des revendications précédentes, comprenant en outre :
un raccordement enfichable de charge (38) qui est recouvert par l'habillage latéral extérieur (12) dans une position de fermeture de l'habillage latéral extérieur (12) et est accessible depuis l'extérieur dans une position d'ouverture de l'habillage latéral extérieur (12) ; et/ou
un câble de charge (40) qui est recouvert par l'habillage latéral extérieur (12) dans une position de fermeture de l'habillage latéral extérieur (12) et est accessible depuis l'extérieur et peut être retiré dans une position d'ouverture de l'habillage latéral extérieur (12).

9. Dispositif (11) selon l'une des revendications précédentes, comprenant en outre :
une cale de roue (44) qui est recouverte par l'habillage latéral extérieur (12) dans une position de fermeture de l'habillage latéral extérieur (12) et est accessible depuis l'extérieur et peut être retirée dans une position d'ouverture de l'habillage latéral extérieur (12) ; et/ou un compartiment de rangement (42) qui est recouvert par l'habillage latéral extérieur (12) dans une position de fermeture de l'habillage latéral extérieur (12) et est accessible depuis l'extérieur dans une position d'ouverture de l'habillage latéral extérieur (12).

10. Dispositif (11) selon l'une des revendications précédentes, comprenant en outre :
un raccordement de remplissage (46) pour l'introduction d'air comprimé dans un système à air comprimé (48) du véhicule utilitaire (10), dans lequel le raccordement de remplissage (46) est recouvert par l'habillage latéral extérieur (12) dans une position de fermeture de l'habillage latéral extérieur (12) et est accessible depuis l'extérieur dans une position d'ouverture de l'habillage latéral extérieur (12).

11. Dispositif (11) selon l'une des revendications précédentes, dans lequel :
l'habillage latéral extérieur (12) est sans cadre ; et/ou l'habillage latéral extérieur (12) est un habillage latéral extérieur (12) côté arrière du véhicule ; et/ou un bord avant de l'habillage latéral extérieur (12) forme au moins partiellement un passage de roue.

12. Dispositif (11) selon l'une des revendications précédentes, dans lequel :
l'habillage latéral extérieur (12) comprend une ou plusieurs entrées d'air (50), dans lequel de préférence :
la ou les plusieurs entrées d'air (50) sont réalisées en forme d'ouïes, en forme de lamelles et/ou en tant que fentes de ventilation.

13. Véhicule utilitaire (10), de préférence poids lourd, comprenant le dispositif (11) selon l'une des revendications précédentes, dans lequel de préférence :
l'habillage latéral extérieur (12) est disposé en dessous d'une structure (16), de préférence d'une structure en caisson, du véhicule utilitaire (10), de préférence en retrait par rapport à la structure (16) ; et/ou l'habillage latéral extérieur (12) est disposé, par rapport à un sens de conduite vers l'avant du véhicule utilitaire (10), derrière un essieu arrière (18) du véhicule utilitaire (10) ; et/ou
l'habillage latéral extérieur (12) peut pivoter, par rapport à un sens de conduite vers l'avant du véhicule utilitaire (10), vers l'avant à partir d'une position de fermeture de l'habillage latéral extérieur (12).
